# EUROPÄISCHE PATENTSCHRIFT

(11) **EP 0 931 949 B1**
(45) Veröffentlichungstag und Bekanntmachung des Hinweises auf die Patenterteilung: **22.06.2005**
(21) Anmeldenummer: 99810006.9
(22) Anmeldetag: 06.01.1999
(51) Int. Cl.: F16C 29/02, F16C 32/06

(54) **Gleitlager**
Slide bearing
Palier lisse

(30) Priorität: 23.01.1998 CH 16198
(43) Veröffentlichungstag der Anmeldung: 28.07.1999
(73) Patentinhaber: Grohe, Bernd, 1815 Clarens (CH)
(72) Erfinder: Zosi, Michel, 1847 Rennaz/VD (CH)
(74) Vertreter: Frei, Alexandra Sarah

(56) Entgegenhaltungen:
- US-A- 4 234 175
- PATENT ABSTRACTS OF JAPAN vol. 009, no. 132 (M-385), 7. Juni 1985 & JP 60 014614 A (HITACHI SEISAKUSHO KK), 25. Januar 1985

## Beschreibung

Die Erfindung betrifft ein Verfahren zur gleitenden Lagerung und ein Gleitlager nach den Oberbegriffen der entsprechenden, unabhängigen Patentansprüche, siehe US-A-4 234 175. Das erfindungsgemässe Gleitlager ist anwendbar zur Lagerung von rotierenden Wellen oder Spindeln oder zur Lagerung von translatorisch bewegten Körpern.

Rotierend oder linear bewegte Maschinenteile werden gleitend (Gleitlager) gelagert oder auf frei rotierenden Kugeln oder Rollen (Wälzlager). Gleitlager sind gegenüber Wälzlagern mechanisch bedeutend einfacher. In ihrer Anwendung aber sind Gleitlager beschränkt vor allem wegen Reibungs- bzw. Schmierproblemen, die in den Gleitlagern wegen der Grösse der aneinanderliegenden und relativ zueinander bewegten Lagerflächen (gegenüber den viel kleineren theoretisch punkt- oder linienförmigen Auflagen in den Wälzlagern) und wegen der auftretenden Gleitreibung (gegenüber der viel kleineren Rollreibung in Wälzlagern) schwieriger zu lösen sind. Aus diesem Grunde ist es ein altes Anliegen des Maschinenbaus, sei es bspw. durch die Entwicklung besserer Schmiermittel oder verbesserter Materialpaarungen, die Gleitlagereigenschaften derart zu verbessern, dass Gleitlager auch für Anwendungen brauchbar werden, in denen sich gemäss dem jeweiligen Stande der Technik nur Wälzlager bewährten.

Es ist daher die Aufgabe der Erfindung, ein Verfahren zur gleitenden Lagerung und ein Gleitlager zu schaffen, derart, dass das erfindungsgemässe Gleitlager gegenüber bekannten Gleitlagern verbesserte Eigenschaften aufweist und zwar vor allem bezüglich Reibung bzw. Schmierung und bezüglich Verschleiss. Das erfindungsgemässe Gleitlager soll beispielsweise in der Anwendung zur Lagerung einer Werkzeug- oder Werkstückspindel in einer Werkzeugmaschine entsprechende Kugellager weitgehend ersetzen können.

Diese Aufgabe wird gelöst durch das Verfahren zur gleitenden Lagerung und durch ein das Verfahren benützendes Gleitlager, wie sie durch die Patentansprüche 1 und 6 definiert sind.

Die Erfindung beruht auf der Anwendung von fluiddynarnischen Gesetzmässigkeiten auf die Technik von Lagerungen. Im erfindungsgemässen Gleitlager wird zwischen einem rotierend oder linear bewegten Körper und einem stationären Körper, auf dem der bewegte Körper zu lagern ist, eine Fluidströmung (vorteilhafterweise eine Luftströmung) erzeugt, derart, dass durch diese Luftströmung fluiddynamische, auf die Lagerflächen wirkende Kräfte erzeugt werden. Die Lagerflächen des bewegbaren und des stationärem Körpers sind dabei derart ausgestaltet, dass der bewegbare Körper auch unter vom Gleitlager aufzunehmenden externen Last durch die fluiddynamischen Kräfte, die auf seine Lagerflächen wirken, in einer durch den stationären Körper vorgegebenen in Gleichgewichtsposition gehalten wird, in welcher Position er berührungslos und quasistabil vom stationären Körper durch einen spaltförmigen Hohlraum beabstandet ist.

Das zwischen bewegtem und stationärem Körper strömende Fluid erfüllt neben seiner Funktion zur Erzeugung der den bewegten Körper positionierenden Kräfte auch die Funktion eines Schmiermittels (im Falle von Luft mit extrem geringer Reibung) und zugleich die Funktion eines Kühlmittels zur Lagerkühlung.

Das Prinzip und beispielhafte Ausführungsformen des erfindungsgemässen Gleitlagers werden anhand der folgenden Figuren im Detail beschrieben. Dabei zeigen:
- **Figur 1**: einen schematischen, axialen Schnitt durch eine beispielhafte Ausführungsform des erfindungsgemässen Gleitlagers für einen in einem Stator gelagerten Rotor;
- **Figuren 2 bis 4**: schematische Darstellungen zur Erklärung des Funktionsprinzips des erfindungsgemässen Gleitlagers;
- **Figur 5**: einen Schnitt quer zur Achse durch den Lagerkörper der Ausführungsform gemäss Figur 1 (Ausschnitt, Schnittlinie VI-VI in Figur 1);
- **Figure 6**: eine Prinzip- und eine Detaildarstellung der Anwendung der Ausführungsform des erfindungsgemässen Gleitlagers gemäss Figur 1 für eine Spindel einer Werkzeugmaschine;
- **Figuren 7 und 8**: in schematischer Darstellung eine beispielhafte Ausführungsform eines in einer Linearführung bewegten Körpers, wobei der Körper in der Linearführung nach dem erfindungsgemässen Verfahren gelagert ist (Figur 7: Querschnitt; Figur 8: räumliche Darstellung).

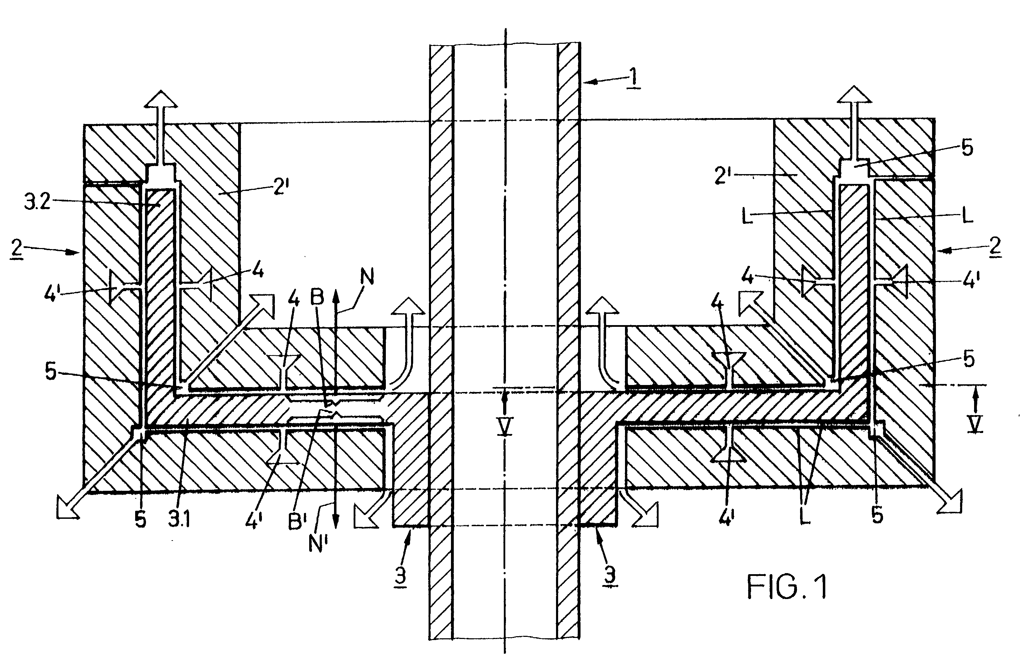

**Figur 1** zeigt in schematisierter Darstellung einen axialen Schnitt durch eine Welle 1 (Rotor oder bewegter Körper), die mit Hilfe einer beispielhaften Ausführungsform des erfindungsgemässen Gleitlagers in einem aus zwei, einen Aufnahmeraum bildenden Teilen 2 und 2' bestehenden Stator gelagert ist. Zur Lagerung der Welle 1 ist ein mit der Welle starr verbundener (beispielsweise auf der Welle aufgeschrumpfter) Lagerkörper 3 vorgesehen, der ein koaxial mit der Welle angeordneter Rotationskörper ist. Der Lagerkörper 3 ist in einem entsprechenden Aufnahmeraum im Stator 2 angeordnet. Die über die Fluidschicht aufeinander gleitenden Lagerflächen L des Gleitlagers sind einerseits an den Flächen des Lagerkörpers 3 und an den zugeordneten (Innen-) Flächen des Stators 2 jeweils paarweise einander gegenüber angeordnet.

Die Lagerflächen L sind derart geformt, dass im wesentlichen jeder für eine Betrachtung beliebig ausgewählte Lagerflächenbereich sowohl des Rotors (Lagerkörper 3) als auch des Stators 2 einen Gegenbereich aufweist, wobei eine Normale (Senkrechte vom Mittelpunkt des Bereiches ausgehend) des betrachteten Lagerflächenbereiches und eine Normale des entsprechenden Gegenbereiches auf derselben Geraden liegen und einander entgegengesetzt gerichtet sind. In der Figur 1 ist diese Symmetriebedingung, die an die Lagerflächen L eines erfindungsgemässen Gleitlagers gestellt sind, am Beispiel dess Bereiches B auf dem Lagerkörper 3 mit einer Normalen N und des Gegenbereiches B' mit einer Normalen N' schematisch angedeutet. Dies betrifft auch die Anordnung der Bohrungen, durch welche Lagerluft eingepresst wird, wie hier am Beispiel der Düsen 4 und 4' gezeigt wird.

Durch eine derartig symmetrische Anordnung der Lagerflächen L wird erreicht, dass die Summe aller auf Lagerflächenbereich und Gegenbereich wirkenden Kräfte nahe der Gleichgewichtsposition Null wird, wenn die fluiddynamisch erzeugten Kräfte auf den Lagerflächenbereich und auf den Gegenbereich die das Gleichgewicht störenden externen Kräfte kompensieren.

Der in der Figur 1 dargestellte Lagerkörper 3 weist für die axiale Lagerung einen sich radial, das heisst tellerförmig um die Welle erstreckenden Teil 3.1 und einen für die radiale Lagerung sich axial, das heisst sich hohlzylinderförmig um die Welle 1 erstreckenden Teil 3.2 auf. Für beide Teile sind die oben angegebenen Symmetriebedingungen im wesentlichen erfüllt.

Der Stator 2 weist ferner als Düsen 4 wirkende Bohrungen zum Einpressen eines Fluids (bspw. Luft) zwischen den Lagerkörper 3 und den Stator 2 und Abluftkanäle 5 zum Wegführen der zwischen Lagerkörper 3 und Stator 2 eingeleiteten Luft auf. Die Düsen könnten auch im Lagerkörper angeordnet sein. Es erweist sich als vorteilhaft, wenn die Anordnung der Düsen 4 und der Abluftkanäle 5 zueinander ebenfalls den oben gegebenen Symmetriebedingungen unterstellt werden, das heisst, dass wenn für jede in einem Lagerflächenbereich angeordnete Düse und für jeden Abluftkanal im Gegenbereich eine entsprechende Düse und ein entsprechender Abluftkanal vorgesehen wird, wie dies in der Ausführungsform gemäss Figur 1 gezeigt ist.

Während der Rotation der Welle 1 wird durch die Düsen 4 Druckluft zwischen die Lagerflächen L der beiden Lagerkörperteile 3.1 und 3.2 und des Stators 2 gepresst, welche Luft im Lagerspalt gleichgerichtet zu den Lagerflächen L von den Düsen zu den Abluftkanälen strömt und dadurch die gewünschte fluiddynamische Wirkung erzeugt. Durch die fluiddynamische Wirkung entstehen Druckverhältnisse zwischen den aufeinander gleitenden Lagerflächen, welche den Lagerkörper 3 in einer Position halten, in der die beidseitigen Abstände zwischen Stator 2 und Lagerkörper 3 im wesentlichen ausgeglichen sind, das heisst, in welcher der Abstand eines betrachteten, beliebigen Lagerflächenbereichs (z.B. B) des Rotors vom Stator im wesentlichen gleich ist wie der Abstand des entsprechenden Gegenbereiches (z.B. B') vom Stator 2, derart also, dass der Lagerkörper 3 relativ zu einer wohldefinierten Mittellage verharrt.

Das heisst mit anderen Worten, die Lagerflächen L des Lagerkörpers 3 und die Lagerflächen L des Stators 2 berühren sich während dem Betrieb nicht. Der einzige Widerstand, den der Lagerkörper 3 bei einer Rotation zu überwinden hat, ist der Widerstand der zwischen den Lagerflächen L strömenden Luft, ein Widerstand, der verglichen mit Gleitreibung zwischen festen Oberflächen oder verglichen mit innerer Reibung in flüssigen Schmierschichten praktisch vernachlässigbar ist. Das erfindungsgemässe Gleitlager ist quasi reibungsfrei und dadurch nicht nur im wesentlichen verlustfrei betreibbar sondern auch im wesentlichen verschleissfrei. Dies bedeutet auch, dass die Materialpaarung der aufeinander gleitenden Lagerflächen nicht relevant ist. Ferner sind die Eigenschaften des erfindungsgemässen Gleitlagers im wesentlichen unabhängig von seiner Lage und unabhängig vom Drehmoment.

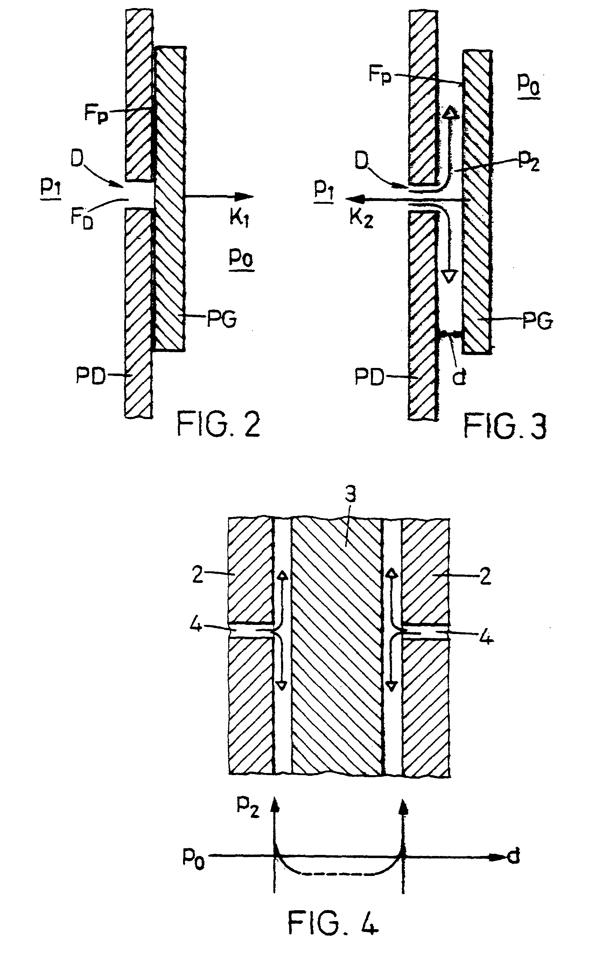

**Figuren 2 bis 4** dienen einem Versuch, das Phänomen der experimentell gefundenen Funktion des erfindungsgemässen Gleitlagers und seine Parameter und Randbedingungen physikalisch zu erklären.

**Figuren 2 und 3** zeigen Druck- und Kraftverhältnisse in einem System, in dem Luft eines Druckes p₁ durch eine in einer Düsenplatte PD angeordneten Düse D, im wesentlichen senkrecht zur Düsenplatte PD angeordnet, in einen spaltförmigen Raum zwischen der Düsenplatte PD und einer Gegenplatte PG gepresst, gegen den Druck p₀, der kleiner ist als p₁ (beispielsweise gegen Atmosphärendruck) entspannt wird.

In der Figur 2 sind die Düsenplatte PD und die Gegenplatte PG nahe beisammen, das heisst, die Breite des Spaltes zwischen den beiden Platten PD und PG ist sehr klein bis gleich Null. In einem derartigen Falle fliesst trotz Druckdifferenz im wesentlichen wenig bis keine Luft durch die Düse D. Auf die Gegenplatte PG wirkt ein Druckunterschied, der die Gegenplatte von der Düsenplatte wegzudrücken versucht. Die auf die Gegenplatte PG wirkende Kraft K₁ ist dabei die Druckdifferenz p₁ - p₀ multipliziert mit einer Fläche F, die mindestens die Querschnittsfläche F_{D} der Düsenöffnung und maximal die Fläche F_{P} der Gegenplatte ist, je nachdem, wie die Flächen aufeinanderliegen. Figur 2 illustriert den statischen Fall.

In **Figur 3** sind die Düsenplatte PD und die Gegenplatte PG voneinander beabstandet (Abstand d), derart, dass Luft aus der Düse D austritt und sich in den Raum zwischen den Platten entspannt. Dadurch entsteht ein dynamisches System, in dem der Gesamtdruck im Raum zwischen der Düsenplatte PD und der Gegenplatte PG sich aus einem in allen Richtungen gleichförmig wirkenden statischen Anteil und einem in Strömungsrichtung wirkenden kinetischen Anteil der Strömung zusammensetzt.

Wenn die Menge der ausgeströmten Luft und die Platzverhältnisse zwischen den Platten derart gewählt werden, dass die aus der Düse austretende Luft bereits zwischen den Platten völlig (das heisst auf Atmosphärendruck) entspannen kann, ist der Gesamtdruck zwischen den Platten identisch dem Atmosphärendruck. Liegt dagegen der statische Druckanteil P₂, um den dynamischen Druckanteil p_{dyn} reduziert, unter Atmosphärendruck, so wirkt auf die Gegenplatte eine gegen die Düsenplatte wirkende Kraft K₂. Diese 'zieht' die Gegenplatte PG gegen die Düsenplatte PD. Das beschriebene Phänomen ist in der Physik als hydrodynamisches Paradoxon bekannt. Da im Betriebsfall die der Düse gegenüberliegende Fläche sich mit grosser Geschwindigkeit in eine Richtung bewegt, werden noch andere Phänomene bzw. Effekte, die hier nicht erklärt werden können, ihre Wirkung haben.

Bei einem Übergang vom statischen Fall gemäss Figur 2 zum dynamischen Fall gemäss Figur 3 durch sukzessive Vergrösserung des Abstandes d zwischen den Platten sinkt also der statische Druck zwischen den Platten von p₁ auf p₂ und kehrt sich in eine auf die Gegenplatte PG wirkende Druckkraft um (K₁ von der Düsenplatte wegweisend; K₂ gegen die Düsenplatte weisend). Dabei wird der minimale statische Druck (maximale Kraft K₂) bei einer zwar kleinen aber offenbar doch messbaren Spaltbreite erreicht und ändert sich bei einer weiteren Verbreiterung innerhalb der kritischen Grösse bzw. der experimentierten minimalen bis maximalen Spaltbreite bzw. des Plattenabstands d nicht mehr.

Versuche haben ergeben, dass bei dem erfindungsgemässen Gleitlager bei einem Abstand oder Gleitlagerspalt von weniger als 5µm vermutlich durch Drosselungseffekte ein Druck entsteht, der zwischen den Platten eine Abstossung bewirkt. Bei einem Abstand über 5µm tritt die oben diskutierte Umkehrung der Wirkung ein. Der experimentierte optimale Leistungsbereich liegt bei einer Spaltbreite von ungefähr 10 µm.

**Figur 4** zeigt nun, in hypothetischer Übertragung, die Anwendung auf einen sich zwischen zwei Lagerflächen eines Stators 2 bewegten Lagerkörpers 3, wie er in ganzer Gestalt in Figur 1 dargestellt ist. Im Stator 2 sind zwei (auf einer gemeinsamen Gerade) einander gegenüberliegende Bohrungen bzw. Düsen 4 angeordnet, aus denen Luft in die spaltförmigen Hohlräume zwischen Lagerkörper 3 und Stator 2 gepresst wird. Unterhalb dem Ausschnitt von Lagerkörper und Stator ist ein Diagramm aufgezeichnet, das den vermutlichen statischen Druckverlauf zwischen Lagerkörper und Stator als Funktion des Abstandes zwischen je zwei aufeinander gleitenden Lagerflächen zeigt.

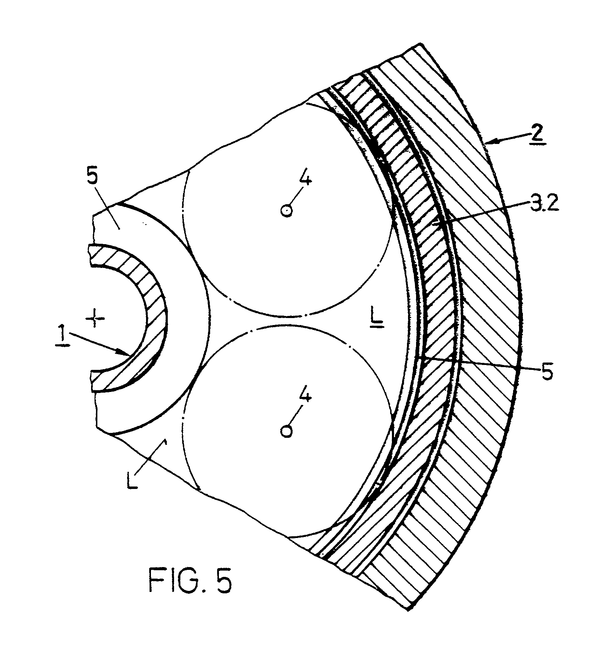

Aus dieser Figur ist ersichtlich, dass der Lagerkörper 3 (in Abwesenheit von externen Kräften) dann eine definierte, kräftefreie Position zwischen den Lagerflächen des Stators einnimmt, wenn der Freiheitsgrad (Abstand d) zwischen Lagerkörper 3 und Stator 2 nicht grösser ist als zweimal Abstand d, der in demjenigen Bereiche liegt, in dem der statische Druck noch vom Abstand abhängig ist, vorteilhafterweise zweimal der grösst mögliche derartige Abstand. Es geht ebenfalls aus der Darstellung hervor, dass im Falle eines Freiheitsgrades, der zwei Abständen in einem Bereich, in dem der statische Druck nicht mehr vom Abstand abhängig ist (dünnere Lagerkörper als der in der Figur 5 dargestellte), eine Vielzahl von kräftefreien Positionen möglich ist, das heisst auch Positionen, in denen die Lagerflächen von Lagerkörper und Stator temporär nicht parallel zueinander verlaufen (bspw. durch radiale Auslenkungen, hervorgerufen durch Bearbeitungskräfte am Werkzeug). Eine minimale Spaltbreite (kleiner 5µm) bleibt jedoch durch den Druckaufbau durch Drosselungskräfte stets erhalten und wirkt als Gegenkraft bei arbeitsbedingten Auslenkungen aus der Gleichgewichtslage.

Versuche mit einem erfindungsgemässen Gleitlager gemäss Figur 1 haben ergeben, dass bei der Verwendung von Luft als strömendes Fluid ein Freiheitsgrad zwischen Lagerkörper 3 und Stator 2 von 0,02 bis 0,04 mm (2 x 0,01 bis 0,02 mm) einen optimalen Betrieb ergeben. Versuche wurden gemacht mit einem Freiheitsgrad von 10 µm (2 x 0,005 mm) bis zu einem Freiheitsgrad von 0,5 mm (2 x 0,25 mm). Aus diesem Versuchsergebnis lässt sich schliessen, dass der statische Druck p₂ bei Spaltweiten bis zu einer Grössenordnung von 0,01 bis 0,02 mm von dieser Spaltbreite abhängig ist.

Es kann angenommen werden, dass der Effekt der Abhängigkeit des statischen Druckes und damit der Abhängigkeit der auf die Lagerflächen wirkenden Kräfte von der Grösse des Abstandes zwischen den Lagerflächen und die konsequente Ausnützung dieses Effektes das erfindungsgemässe Verfahren zur gleitenden Lagerung ermöglicht. Durch diesen Effekt entsteht ein sich selbst zentrierendes System, in dem auf den Lagerkörper 3, sobald er sich aus seiner Gleichgewichtslage entfernt, eine rückstellende Kraft wirkt. Ein ähnliches System, in dem zwischen den Lagerflächen ein Überdruck (Luftkissen) erzeugt wird, dessen Druckverhältnisse wegen des höheren statischen Zustandes nicht von der Spaltbreite abhängig sind, hat keine selbstzentrierende Wirkung und kann aus diesem Grunde nicht so funktionieren, wie die Erfindung es zeigt.

**Figur 5** zeigt einen Ausschnitt aus einem Schnitt quer zur Achse durch das Gleitlager gemäss Figur 1 (Schnittline V-V). Die Figur zeigt vor allem eine axiale Draufsicht auf die obere Lagerfläche L des Stators, auf der die obere Lagerfläche des tellerförmigen Lagerkörperteils 3.1. gleitet. Es sind zwei Düsen 4 und zwei Abluftkanäle 5 sichtbar. Die fluiddynamische Wirkung der aus den Düsen ausströmenden Luft kann im wesentlichen als kreissymmetrisch angenommen werden und nimmt mit grösser werdendem Abstand von der Düse wegen der inneren Reibungsverluste in der Luft, wie vorgesehen, stetig ab.

Sollen die Wirkungen der einzelnen Düsen voll ausgenützt werden, sind sie derart anzuordnen, dass ihre Wirkungsfläche (kreisförmige Fläche, auf der die fluiddynamische Wirkung nicht vernachlässigbar ist, in Figur 5 mit einer strichpunktierten Kreislinie um die Düsen 4 angedeutet) einander möglichst nicht, jedenfalls nicht wesentlich überschneiden. Versuche zeigen, dass bei einem Freiheitsgrad zwischen Lagerkörper und Stator von 2 x 0,01 bis 0,02 mm, bei einem Arbeitsdruck zwischen ca. 1,5 - 5 atü (1,5 bis 5·10⁵ Pa) und bei einem Öffnungsdurchmesser der Düse von ca. 0,5 mm mit einem Abstand zwischen benachbarten Düsen (bis zu 100 mm) im Versuchsaufbau von ca. 80 mm gute Wirkungen erzielt werden. Dieser Erfahrungswert kann gedeutet werden als Durchmesser eines Wirkungskreises, in dem die fluiddynamische Wirkung in nicht vernachlässigbarer Weise zur Funktion des Lagers beiträgt. Dies bedeutet auch, dass zur möglichst vollen Ausnützung der vorhandenen Flächen eines Lagerkörpers 3, die Abluftkanäle 5 (hier sind es Nuten) nicht weiter als etwa 40 mm von den Düsen entfernt angelegt sein sollten.

Streng genommen gelten die im Zusammenhang mit der Figur 1 aufgestellten Symmetriebedingungen nicht für die ganzen Lagerflächen sondern nur für diejenigen Lagerflächenbereiche, über denen Fluidströmungen erzeugt werden, über die sich also ein fluiddynamischer Wirkungskreis erstreckt und nur dann wenn die fluiddynamische Wirkung in allen diesen Kreisen dieselbe ist. Verallgemeinert gilt, dass die Lagerflächen des bewegten Körpers und die Fluidströme derart aufeinander abzustimmen sind, dass der angeströmte bewegte Körper in seiner im Stator zentrierten (Mittel-) Lage im wesentlichen kräftefrei, das heisst im Gleichgewicht ist.

Bei den obigen Betrachtungen wurde ein Zustand des betrachteten Lagers ohne externe (z.B. radiale) Krafteinwirkung vorausgesetzt. Damit das erfindungsgemässe Lager auch externe Kräfte, wie beispielsweise das Gewicht des Rotors oder Belastungskräfte, die auf die Welle wirken, aufnehmen kann, sind die fluiddynamisch wirksamen, das heisst mit Luft überströmten Lagerflächen des Lagerkörpers 3 und damit auch des Aufnahmeraums des Stators 2 derart gross zu wählen, dass die Störkräfte nur einen kleinen Prozentsatz der fluiddynamisch erzeugten Kräfte ausmachen. Das heisst mit anderen Worten, dass für ein höher belastetes Lager mehr "Tragfläche" also ein grösseres Lagerkörper/Stator-Paar zur Verfügung zu stellen ist. Es hat sich gezeigt, dass bei den oben angegebenen Abmessungen radiale Kräfte bis zu 25 kp aufgenommen werden können. Verglichen mit üblichen arbeitsmässigen radialen Auslenkkräften an einer Frässpindel von 25 bis 250 Pond, sieht man, dass das erfinderische System ausserordentlich robust gegen Störkräfte ist.

Für Arbeitsbedingungen mit kleinen externen Störkräften sind ohne weiteres Systeme mit wesentlich kleinerflächigen Lagerkörpern mit entsprechenden Abständen der Düsen und Abluftkanälen möglich.

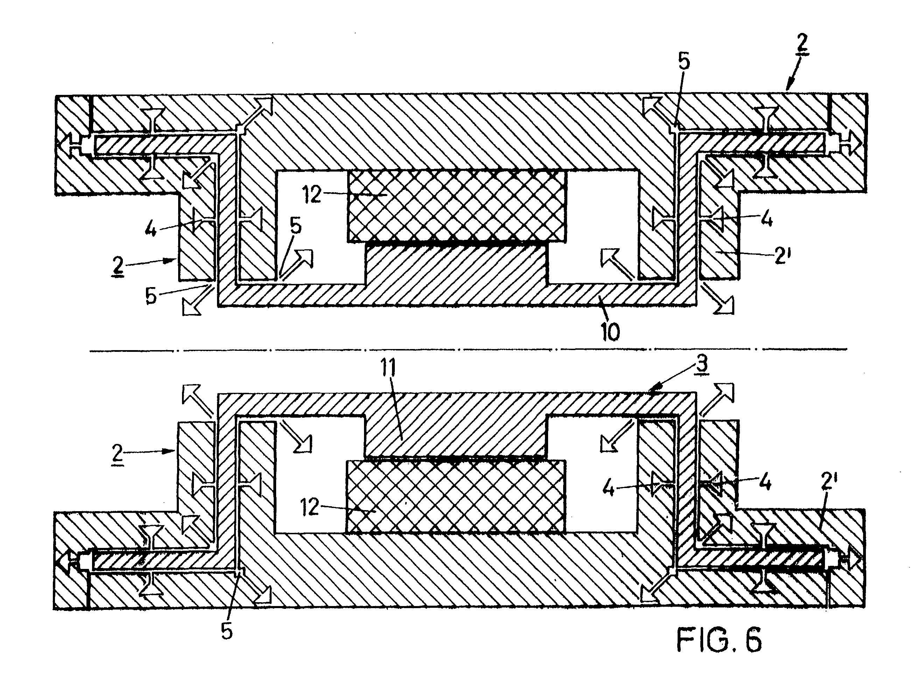

**Figur 6** zeigt schematisch die wesentlichen Teile eines Spindelantriebs mit zwei erfindungsgemässen Gleitlagern, die dem in der Figur 1 dargestellten Gleitlager entsprechen. Es sind mindestens Teile eines elektrisch angetriebenen Rotors 10 mit einem Magnetkern 11 und an den Enden angeordneten Lagerkörpern 3 dargestellt. Ferner ist ein die Lagerkörper 3 aufnehmender Stator 2 mit einer den antreibenden Elektromotor ergänzenden Spule 12 und einer Anlage für Düsen 4 und Ableitungen 5 für die entspannte Luft dargestellt. Magnetkern 11 und Spule 12 stellen zusammen, wie schon gesagt, einen Elektroantrieb für den Antrieb des Rotors 10 dar. Der Freiheitsgrad zwischen Rotor und Stator beträgt radial und axial 2 x 0,015 mm und die Düsen 4 haben einen Öffnungsddurchmesser von ca 0,5mm. Durch diese Düsen wird Luft von einem Betriebsdruck von bspw. 4 atü (4·10⁵ Pa) nahezu auf Atmosphärendruck entspannt. Die Spindel wird mit 30,000 bis 40'000 U/min betrieben. Es zeigt sich, dass die dargestellte Spindel unter den angegebenen Bedingungen auch unter der Wirkung von radial wirkenden Störkräften bis zu 25 kp (250 N) störungsfrei arbeitet. Normale, auf Werkzeugspindeln wirkende Radialkräfte sind in der Grössenordnung von ca. 0,5 kp (5 N). Man erkennt hier wieder die symmetrische Anordnung, insbesondere der sich gegenübergestellten bzw. angeordneten und entgegen auf den Lagerkörper wirkenden Düsen und den in jeweils gleichen Abständen von den Düsen angeordneten Abluftkanäle.

Der Luftverbrauch des erfindungsgemässen Gleitlagers ist verhältnismässig gering. Die verwendete Luft soll frei von festen Partikeln sein, muss aber sonst nicht speziell aufbereitet werden.

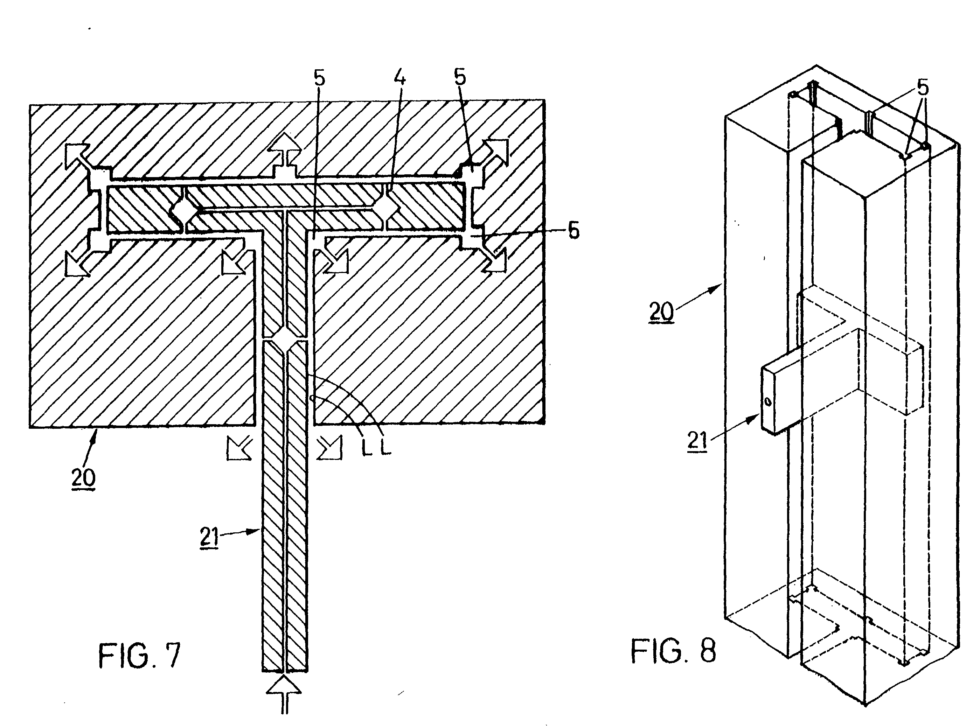

**Figuren 7 und 8** zeigen noch einen in einer Linearführung 20 bewegten Körper 21, wobei der bewegte Körper in der Linearführung nach dem erfindungsgemässen Verfahren gelagert ist. Figur 7 zeigt einen Querschnitt durch das System, in dem wiederum Lagerflächen L, Düsen 4 und Abluftkanäle 5 dargestellt sind, die die eingangs genannten Symmetrieanforderungen erfüllen. Figur 8 ist eine dreidimensionale Darstellung des Systems. Im Unterschied zum Gleitlager gemäss Figur 1, sind die Düsen 4 nicht im stationären sondern im bewegten Körper angeordnet, was angesichts der viel grösseren Ausdehnung der Lagerflächen des Stators (Linearführung) im Vergleich zu den Lagerflächen des bewegten Körpers sinnvoll ist.

Figur 7 kann auch als System von Rotor 21 und Stator 20 aufgefasst werden. Im Gegensatz zum Lager gemäss Figur 1 hat der am Ende der rotierenden Welle angeordnete Lagerkörper nur einen sich radial erstreckenden, tellerförmigen Teil, während die Funktion des sich axial erstreckenden, hohlzylindrischen Teils von der Welle selbst übernommen wird. Nach dem bereits Gesagten, kann der Rotor gemäss Figur 10 radial weniger stark belastet werden als die Welle der Figur 1, da die radial wirkenden Lagerflächen kleiner sind.

Im erfindungsgemässen Gleitlager werden zwischen den aufeinander gleitenden Lagerflächen (L) eines bewegbaren Körpers (1/3) und eines stationären Körpers (2) Luftströmungen erzeugt, indem Druckluft durch Düsen (4) zwischen den Lagerflächen (L) gegen Atmosphärendruck entspannt wird. Durch diese Luftströmungen wird der statischen Druck zwischen den Lagerflächen (L) reduziert, sodass zwischen dem bewegten und dem stationären Körper wirkende Druckkräfte entstehen. Die Lagerflächen (L) und die Luftströmungen sind dabei derart aufeinander abgestimmt, dass der bewegbare Körper (1/3) in einem kräftefreien Gleichgewichtszustand ist, wenn er eine Position einnimmt, in der die Lagerflächen (L) des bewegbaren Körpers (1/3) die Lagerflächen (L) des stationären Körpers (2) nicht berühren. Damit die Gleichgewichtsposition eine definierte ist, ist es vorteilhaft, das Freiheitsgrad zwischen bewegbarem Körper (1/3) und stationärem Körper (2) derart zu wählen, dass jede mögliche Veränderung der Abstände zwischen den Lagerflächen eine gegenwirkende Veränderung der Druckverhältnisse bewirkt. Für Luftströmungen sind Abstände von ca. 0,01 bis 0,02 mm geeignet. Damit das Gleitlager externe Kräfte aufnehmen kann, ist es vorteilhaft, zur Vergrösserung der Druckkräfte die Lagerflächen zu vergrössern. Das Gleitlager ist quasi reibungsfrei und quasi verschleissfrei. Es eignet sich für die Lagerung von rotierenden oder linear bewegten Maschinenteilen, z.B. für die Lagerung von Spindeln in Werkzeugmaschinen.

## Patentansprüche

1. Verfahren zur Erwirkung einer gleitenden Lagerung eines rotierend oder linear bewegbaren Körpers (1/3, 21) in einem stationären Körper (2, 20), wobei einander entsprechende Lagerflächen (L) des bewegbaren Körpers und des stationären Körpers über ein Gleitmittel aufeinander gleiten, wobei zwischen aufeinander gleitenden Lagerflächen (L) Fluidströmungen erzeugt werden, durch die der statische Druck (p₂) zwischen den aufeinander gleitenden Lagerflächen (L) reduziert wird und zwischen dem stationären Körper und dem bewegten Körper (1/3, 21) Druckkräfte entstehen, wobei die Fluidströmungen und die Lagerflächen derart aufeinander abgestimmt werden, dass alle auf den bewegten Körper wirkenden Druckkräfte sich im wesentlichen gegenseitig aufheben, sobald der bewegte Körper (1/3, 21) in einer den stationären Körper (2, 20) nicht berührenden Gleichgewichtslage positioniert ist, und bei Auslenkung aus dieser Lage Gegenkräfte entstehen, wobei die Lagerflächen (L) des bewegten Körpers (1/3, 21) derart geformt sind, dass im wesentlichen jeder Lagerflächenbereich (B) einen ihm entsprechenden Gegenbereich (B') hat und die Normalen (N und N') des Lagerflächenbereichs (B) und des Gegenbereiches (B') auf derselben Geraden liegen und einander entgegengesetzte Richtungen haben, und wobei durch Düsen (4) im wesentlichen senkrecht zu den Lagerflächen (L) Luft zwischen die Lagerflächen gepresst wird, **dadurch gekennzeichnet, dass** die Fluidströmungen über jedem Lagerfächenbereich (B) gleich gehalten werden wie die Fluidströmungen über dem entsprechenden Gegenbereich (B'), **dadurch**, dass die Düsen (4) auf Lagerflächenbereichen (B) und Gegenbereichen (B') gleich angeordnet sind und dass die Zwischenräume zwischen Lagerflächen durch Entlüftungskanäle (5) entlüftet werden, wobei für Lagerflächenbereiche und Gegenbereiche einander entsprechende Entlüftungskanäle (5) vorgesehen sind und wobei die Düsen (4) mittig zwischen Entlüftungskanälen (5) angeordnet sind.

2. Verfahren nach Anspruch 1, **dadurch gekennzeichnet, dass** der Freiheitsgrad zwischen dem stationärem Körper (2, 20) und dem bewegten Körper (1/3, 21) derart gewählt wird, dass die Abstände zwischen Lagerflächen (L) des stationären Körpers und darauf gleitenden Lagerflächen des bewegten Körpers derart klein sind, dass jede Auslenkung des bewegten Körpers (1/3, 21) aus seiner Gleichgewichtslage die Druckverhältnisse zwischen den Lagerflächen verändert.

3. Verfahren nach Anspruch 2, **dadurch gekennzeichnet, dass** die Fluidströmungen Luftströmungen sind und dass der Freiheitsgrad zwischen bewegtem Körper (1/3, 21) und stationärem Körper (2, 20) derart gewählt wird, dass der mittlere Abstand (d) zwischen aufeinander gleitenden Lagerflächen (L) 0,005 bis 0,05 mm vorzugsweise 0,01 bis 0,02 mm beträgt.

4. Verfahren nach Anspruch 3, **dadurch gekennzeichnet, dass** zur Erzeugung der Fluidströmungen Luft durch die Düsen (4) von einem Druck von mindestens 1,5 atm (1,5·10⁵ Pa) gegen Atmosphärendruck entspannt wird und dass die Düsen einen Öffnungsdurchmesser von ca. 0,5 mm haben.

5. Verfahren nach einem der Ansprüche 1 bis 4, **dadurch gekennzeichnet, dass** bei vorgegebenem Betriebsdruck die Grösse der überströmten Lagerflächen derart auf externe Störkräfte abgestimmt wird, dass die Störkräfte einen kleinen Prozentsatz der Druckkräfte (K₂) darstellen.

6. Gleitlager zur Lagerung eines rotierend oder linear bewegbaren Körpers (1/3, 21) in einem stationären Körper (2, 20), wobei einander entsprechende Lagerflächen (L) des bewegbaren Körpers und des stationären Körpers aufeinander gleiten, wobei das Gleitlager Mittel aufweist zur Erzeugung von Fluidströmungen zwischen aufeinander gleitenden Lagerflächen (L) derart, dass der bewegbare Körper in einer Gleichgewichtslage verharren kann, wobei die Lagerflächen (L) des bewegten Körpers (1/3, 21) derart geformt sind, dass im wesentlichen jeder Lagerflächenbereich (B) einen ihm entsprechenden Gegenbereiche (B') hat und die Normalen (N und N') des Lageflächenbereichs (B) und des Gegenbereiche (B') auf derselben Geraden liegen und einander entgegengesetzte Richtungen haben, und wobei auf Lagerflächen Düsen (4) angeordnet sind, durch die im wesentlichen senkrecht zu den Lagerflächen (L) Luft zwischen die Lagerflächen pressbar ist, **dadurch gekennzeichnet, dass** die Düsen (4) auf Lagerflächenbereichen (B) und Gegenbereichen (B') gleich angeordnet sind und dass für die Entlüftung der Zwischenräume zwischen Lagerflächen für Lagerflächenbereiche (B) und Gegenbereiche (B') einander entsprechende Entlüftungskanäle (5) vorgesehen sind, wobei die Düsen (4) mittig zwischen den Entlüftungskanälen (5) angeordnet sind.

7. Gleitlager nach Anspruch 6, **dadurch gekennzeichnet, dass** der Freiheitsgrad zwischen bewegbarem Körper (1/3, 21) und stationärem Körper (2, 20) derart ist, dass der mittlere Abstand (d) zwischen aufeinander gleitenden Lagerflächen (L) 0,005 bis 0,1 mm vorzugsweise 0,01 bis 0,02 mm beträgt.

8. Gleitlager nach Anspruch 6 oder 7, **dadurch gekennzeichnet, dass** die Düsen (4) auf den Lagerflächen (L) mit Abständen von mindestens 80mm angeordnet sind.

9. Gleitlager nach einem der Ansprüche 6 bis 8, **dadurch gekennzeichnet, dass** zur Vergrösserung der Lagerflächen (L) und **dadurch** der Druckkräfte (K₂) am bewegbaren Körper (1/3, 21), Lagerkörper (3) befestigt sind, auf denen die Lagerflächen (L) angeordnet sind.

10. Gleitlager nach Anspruch 9, **dadurch gekennzeichnet, dass** der bewegte Körper eine rotierende Welle (1) ist und dass an dieser als Lagerkörper (3) ein Rotationskörper koaxial angeordnet ist.

11. Gleitlager nach Anspruch 10, **dadurch gekennzeichnet, dass** der mindestens eine Lagerkörper (3) für die axiale Lagerung der Welle einen sich radial von der Welle (1) erstreckenden, tellerförmigen Teil (3.1) und für die radiale Lagerung der Welle (1) einen sich axial erstreckenden, hohlzylindrischen Teil (3.2) aufweist.

12. Gleitlager nach Anspruch 10 oder 11, **dadurch gekennzeichnet, dass** die Düsen (4) in den Lagerflächen (L) des stationären Körpers (2) angeordnet sind.

13. Gleitlager nach einem der Ansprüche 6 bis 8, **dadurch gekennzeichnet, dass** der stationäre Körper (20) eine Linearführung ist und dass der bewegte Körper (21) in der Linearführung linear bewegbar ist.

14. Gleitlager nach Anspruch 13, **dadurch gekennzeichnet, dass** die Düsen (4) in den Lagerflächen (L) des bewegbaren Lagerkörpers (21) angeordnet sind.

15. Verwendung eines Lagers nach einem der Ansprüche 6 bis 14 zur Lagerung einer Werkzeugspindel in einer Werkzeugmaschine.

## Claims

1. Method for bringing about a sliding bearing of a body (1/3,21) movable in rotary or linear manner in a stationary body (2,20), corresponding bearing surfaces (L) of the movable body and the stationary body sliding on one another by means of a lubricant, wherein between the bearing surfaces (L) sliding on one another are produced fluid flows, through which the static pressure (P₂) between the bearing surfaces (L) sliding on one another are reduced and between the stationary body and the moving body (1/3, 21) compressive forces occur, the fluid flows and bearing surfaces being matched to one another in such a way that all the compressive forces acting on the moving body are substantially mutually cancelled out, as soon as the moving body (1/3, 21) is positioned in an equilibrium position not contacting the stationary body (2, 20) and on deflection from this position opposing forces occur, the bearing surfaces (L) of the moved body (1/3, 21) being shaped such that substantially every bearing surface area (B) has a counter area (B') corresponding to it and the normals (N and N') of the bearing surface area (B) and the counter area (B') lie on the same straight line and have opposing directions, and wherein air is pressed between the bearing surfaces (L) through nozzles (4) in a substantially vertical direction to the bearing surfaces (L), **characterized in that** the fluid flows above each bearing surface area (B) are maintained identical to the fluid flows above the corresponding counter areas (B'), by arranging the nozzles (4) identically on bearing surface areas (B) and counter areas (B') and by ventilation of the spaces between the bearing surfaces through ventilation channels (5), wherein corresponding ventilation channels (5) are provided for bearing surface areas and counter areas and wherein the nozzles (4) are arranged centrally between the ventilation channels (5).

2. Method according to claim 1, **characterized in that** the degree of freedom between the stationary body (2, 20) and the moving body (1/3, 21) is chosen in such a way that the spacings between the bearing surfaces (L) of the stationary body and the bearing surfaces of the moving body sliding thereon are so small that any deflection of the moving body (1/3, 21) from its equilibrium position modifies the pressure ratios between the bearing surfaces.

3. Method according to claim 2, **characterized in that** the fluid flows are air flows and that the degree of freedom between the moving body (1/3, 21) and stationary body (2, 20) is chosen in such a way that the average spacing (d) between bearing surfaces (L) sliding on one another is 0.005 to 0.05 mm, preferably 0.01 to 0.02 mm.

4. Method according to claim 3, **characterized in that** for producing the fluid flows air is expanded through nozzles (4) from a pressure of at least 1.5 atm (1.5 10⁵ Pa) to atmospheric pressure and that the nozzles have an opening diameter of approximately 0.5 mm.

5. Method according to one of the claims 1 to 4, **characterized in that** for a given operating pressure the size of the overflowed bearing surfaces is so matched to the external disturbance forces, that the disturbance forces represent a small percentage of the compressive forces (K₂).

6. Sliding bearing for seating a body (1/3, 21) movable in rotary or linear manner in a stationary body (2, 20), corresponding bearing surfaces (L) of the movable body and the stationary body sliding on one another, wherein the sliding bearing has means for producing fluid flows between bearing surfaces (L) sliding on one another in such a way that the movable body can remain in an equilibrium position, wherein the bearing surfaces (L) of the movable body (1/3, 21) are shaped such that substantially every bearing surface area (B) has a counter area (B') corresponding to it and the normals (N and N') of the bearing surface area (B) and the counter area (B') lie on the same straight line and have opposing directions, and wherein air is pressed between the bearing surfaces (L) through nozzles (4) in a substantially vertical direction to the bearing surfaces (L), **characterized in that** the nozzles (4) are arranged identically on bearing surface areas (B) and counter areas (B') and that for ventilation of the spaces between the bearing surfaces, corresponding ventilation channels (5) are provided for bearing surface areas (B) and counter areas (B') are provided, the nozzles (4) being arranged centrally between the ventilation channels (5).

7. Sliding bearing according to claim 6, **characterized in that** the degree of freedom between the moving body (1/3, 21) and stationary body (2, 20) is such that the average spacing (d) between bearing surfaces (L) sliding on one another is 0.005 to 0.1 mm, preferably 0.01 to 0.02 mm.

8. Sliding bearing according to claim 6 or 7, **characterized in that** the nozzles (4) are placed on the bearing surfaces (L) with spacings of at least 80 mm.

9. Sliding bearing according to one of the claims 6 to 8, **characterized in that** for enlarging the bearing surfaces (L) and consequently increasing the compressive forces (K₂) on the movable body (1/3, 21), bearing bodies (3) are fixed and the bearing surfaces (L) are located on them.

10. Sliding bearing according to claim 9, **characterized in that** the moving body is a rotary shaft (1) and that on the latter is coaxially arranged a rotary body as the bearing body (3).

11. Sliding bearing according to claim 10, **characterized in that** the at least one bearing body (3) has for the axial bearing of the shaft a plate-shaped part (3.1) extending radially away from the shaft (1) and for the radial bearing of the shaft (1) an axially extending, hollow cylindrical part (3.2).

12. Sliding bearing according to claim 10 or 11, **characterized in that** the nozzles (4) are located in the bearing surfaces (L) of the stationary body (2).

13. Sliding bearing according to one of the claims 6 to 8, **characterized in that** the stationary body (20) is a linear guide and that the moving body (21) is linearly movable in the linear guide.

14. Sliding bearing according to claim 13, **characterized in that** the nozzles (4) are placed in the bearing surfaces (L)of the movable bearing body (21).

15. Use of a bearing according to one of the claims 6 to 14 for mounting a tool spindle in a machine tool.

## Revendications

1. Procédé pour obtenir un appui coulissant d'un élément en rotation ou en translation linéaire (1/3, 21) dans un élément stationnaire (2, 20), dans lequel des surfaces d'appui (L) de l'élément en mouvement et de l'élément stationnaire se correspondant les unes aux autres glissent les unes sur les autres par l'intermédiaire d'un moyen de glissement, dans lequel des courants de fluide sont créés entre les surfaces d'appui (L) glissant l'une sur l'autre, ce qui réduit la pression statique (p₂) entre les surfaces d'appui (L) glissant l'une sur l'autre et crée entre l'élément stationnaire et l'élément en mouvement (1/3, 21) des forces de pression, les courants de fluide et les surfaces d'appui étant ajustés les uns aux autres de telle manière que toutes les forces de pression exercées sur l'élément en mouvement s'annulent mutuellement dès que l'élément en mouvement (1/3, 21) se trouve dans une position d'équilibre où il ne touche pas l'élément stationnaire (2, 20), et que des forces opposées se créent lors de la déviation à partir de cette position, les surfaces d'appui (L) de l'élément en mouvement (1/3, 21) étant conformées de telle manière que chaque zone de la surface d'appui (B) corresponde à une zone opposée (B') et les perpendiculaires (N et N') de la zone de surface d'appui (B) et de la zone opposée (B') se trouvent sur la même droite et ont des directions opposées l'une à l'autre, et dans lequel des buses (4) injectent de l'air entre les surfaces d'appui (L) dans une direction sensiblement perpendiculaire aux surfaces d'appui, **caractérisé en ce que** les courants de fluide sur chaque zone de surface d'appui (B) sont maintenus égaux à ceux sur la zone opposée (B') correspondante par le fait que les buses (4) sont disposées de la même manière sur les zones de surface d'appui (B) et les zones opposées (B') et que les intervalles entre les surfaces d'appui sont purgés de leur air par des canaux de purge d'air (5), des canaux de purge d'air (5) se correspondant mutuellement étant prévus pour les zones de surface d'appui et les zones opposées et les buses (4) étant disposées au centre entre des canaux de purge d'air (5).

2. Procédé selon la revendication 1, **caractérisé en ce que** le degré de liberté entre l'élément stationnaire (2, 20) et l'élément en mouvement (1/3, 21) est choisi de telle manière que les distances entre les surfaces d'appui (L) de l'élément stationnaire et les surfaces d'appui de l'élément en mouvement glissant sur celles-ci soient suffisamment petites pour que toute déviation de l'élément en mouvement (1/3, 21) par rapport à sa position d'équilibre modifie les conditions de pression entre les surfaces d'appui.

3. Procédé selon la revendication 2, **caractérisé en ce que** les courants de fluide sont des courants d'air et le degré de liberté entre l'élément en mouvement (1/3, 21) et l'élément stationnaire (2, 20) est choisi de telle manière que la distance moyenne (d) entre les surfaces d'appui (L) glissant l'une sur l'autre soit de 0,005 à 0,05 mm, de préférence de 0,01 à 0,02 mm.

4. Procédé selon la revendication 3, **caractérisé en ce que**, pour produire les courants de fluide, de l'air est détendu par les buses (4) d'une pression d'au moins 1,5 atmosphère (1,5 x 10⁵ Pa) jusqu'à la pression atmosphérique et **en ce que** les buses ont un diamètre d'ouverture d'environ 0,5 mm.

5. Procédé selon l'une des revendications 1 à 4, **caractérisé en ce que**, pour une pression de fonctionnement prédéterminée, la grandeur des surfaces d'appui parcourues par le courant est ajustée aux forces perturbatrices externes de telle manière que celles-ci représentent un faible pourcentage des forces de pression (K₂).

6. Palier de glissement pour l'appui d'un élément mobile (1/3, 21) en rotation ou en translation linéaire dans un élément stationnaire (2, 20), dans lequel des surfaces d'appui (L) de l'élément en mouvement et de l'élément stationnaire se correspondant les unes aux autres glissent les unes sur les autres, le palier à glissement possédant des moyens pour créer des courants de fluide entre des surfaces d'appui (L) glissant l'une sur l'autre, de telle manière que l'élément mobile puisse demeurer dans une position d'équilibre, les surfaces d'appui (L) de l'élément en mouvement (1/3, 21) étant conformées de telle manière que sensiblement toutes les zones de surface d'appui (B) correspondent à une zone opposée (B') et que les perpendiculaires (N et N') de la zone de surface d'appui (B) et de la zone opposée (B') se trouvent sur la même droite et aient des directions opposées, et des buses (4) étant disposées sur les surfaces d'appui et pouvant injecter de l'air entre les surfaces d'appui dans une direction sensiblement perpendiculaire aux surfaces d'appui (L), **caractérisé en ce que** les buses (4) sont disposées de la même manière sur les zones de surface d'appui (B) et les zones opposées (B') et **en ce que** pour la purge d'air des intervalles entre les surfaces d'appui pour les zones de surface d'appui (B) et les zones opposées (B'), il est prévu des canaux de purge d'air (5) qui se correspondent mutuellement, les buses (4) étant disposées au centre entre les canaux de purge d'air (5).

7. Palier à glissement selon la revendication 6, **caractérisé en ce que** le degré de liberté entre l'élément en mouvement (1/3, 21) et l'élément stationnaire (2, 20) est tel que la distance moyenne (d) entre les surfaces d'appui (L) glissant les unes sur les autres est de 0,005 à 0,1 mm, de préférence de 0,01 à 0,02 mm.

8. Palier à glissement selon la revendication 6 ou 7, **caractérisé en ce que** les buses (4) sont disposées sur les surfaces d'appui (L) à des distances d'au moins 80 mm.

9. Palier à glissement selon l'une des revendications 6 à 8, **caractérisé en ce que** pour augmenter les surfaces d'appui (L) et par conséquent les forces de pression (K₂) s'exerçant sur l'élément mobile (1/3, 21), il est prévu des éléments d'appui (3) fixés, sur lesquels les surfaces d'appui (L) sont disposées.

10. Palier à glissement selon la revendication 9, **caractérisé en ce que** l'élément en mouvement est un arbre en rotation (1) et **en ce qu'**un élément en rotation est disposé de manière coaxiale sur celui-ci en tant qu'élément d'appui (3).

11. Palier à glissement selon la revendication 10, **caractérisé en ce que** l'élément d'appui (3) au nombre d'un au moins présente pour le support axial de l'arbre une partie en forme de disque (3.1) s'étendant radialement à partir de l'arbre (1) et pour le support radial de l'arbre (1) une partie en forme de cylindre creux (3.2) s'étendant dans le sens axial.

12. Palier à glissement selon la revendication 10 ou 11, **caractérisé en ce que** les buses (4) sont disposées dans les surfaces d'appui (L) de l'élément stationnaire (2).

13. Palier à glissement selon l'une des revendications 6 à 8, **caractérisé en ce que** l'élément stationnaire (20) est un guide linéaire et **en ce que** l'élément en mouvement (21) peut être déplacé de façon linéaire dans le guide linéaire.

14. Palier à glissement selon la revendication 13, **caractérisé en ce que** les buses (4) sont disposées dans les surfaces d'appui (L) de l'élément de palier mobile (21).

15. Utilisation d'un palier selon l'une des revendications 6 à 14 pour l'appui d'une broche porte-outil dans une machine-outil.
